Europäisches Patentamt

European Patent Office

Office européen des brevets

(11) Publication number: **0 622 432 A1**

## EUROPEAN PATENT APPLICATION

(21) Application number: **94105673.1**

(22) Date of filing: **13.04.94**

(51) Int. Cl.⁵: **C09J 7/04**, D21H 17/34

(30) Priority: **22.04.93 US 51477**

(43) Date of publication of application:
**02.11.94 Bulletin 94/44**

(84) Designated Contracting States:
**DE FR GB IT**

(71) Applicant: **MINNESOTA MINING AND MANUFACTURING COMPANY**
**3M Center,**
**P.O. Box 33427**
**St. Paul, Minnesota 55133-3427 (US)**

(72) Inventor: **Schurb, Francis A., c/o Minnesota Mining and**
**Manufacturing Company,**
**2501 Hudson Road**
**Saint Paul, Minnesota 55133-3427 (US)**
Inventor: **Ellsworth, Arthur J., c/o Minnesota Mining and**
**Manufacturing Company,**
**2501 Hudson Road**
**Saint Paul, Minnesota 55133-3427 (US)**

(74) Representative: **Meyers, Hans-Wilhelm, Dr. et al**
**Patentanwälte**
**von Kreisler-Selting-Werner**
**Postfach 10 22 41**
**D-50462 Köln (DE)**

(54) **Compounded latex saturants for porous backing.**

(57) The present invention is directed to a novel latex saturant for porous backings and porous sheets, especially for paper backings used in pressure sensitive adhesive tapes. The saturant includes a latex an elastomer base compounded with both tackifying resin and filler. The elastomer base may be either an acrylate or a rubber, such as carboxylated styrene-butadiene rubber. Paper incorporating the saturant of the invention provides a backing that retains flexibility, tensile and elongation, and gives an improved drape or hand. Pressure sensitive adhesive tapes which employ the compounded saturated backing show good adhesion with aging.

EP 0 622 432 A1

## Field of the Invention

This invention relates to a novel compounded latex saturant for porous backings, and to porous sheets, adhesive tapes and adhesive sheets which utilize the saturant.

## Background of the Invention

Paper backings are widely used in many adhesive tapes. However, paper may delaminate at the thicknesses most commonly used for such tapes (3.5 to 8 mils). Accordingly, the paper is strengthened by impregnation with a polymeric saturant such as styrene-butadiene or acrylic latex. In general, the saturant binds or welds the paper fibers together, so that the paper will not split or the fibers pull loose under the force exerted by the adhesive when the tape is unwound from a roll or removed from surfaces.

Impregnants commonly used for saturating and unifying paper backings have traditionally been of two types as described in U.S. Patent No. 3,503,495 (Gustafson). The first type is essentially a fluxed blend of broken down natural or synthetic rubber, tackifier resin, and zinc oxide. Such saturants are typically applied by dissolving the elastomer and other saturant components in a hydrocarbon solvent, immersing a porous backing in the liquid saturant, removing the excess liquid, and drying the backing to remove the solvent. Examples of solvent-based compounded saturants are disclosed in U.S. Patent No. 2,410,078 (Kellgren), U.S. Patent No. 2,444,830 (Kellgren), and U.S. Patent No. 3,240,579 (Ahlbrecht).

The second type of saturant is a synthetic rubbery polymer applied either as a solution in an organic solvent or as an aqueous dispersion or latex, such as a rubbery butadiene-acrylonitrile polymer, a rubbery acrylate polymer, rubbery styrene butadiene polymer or rubbery styrene butadiene-acrylonitrile polymer. Because of the environmental and safety considerations associated with the use of solvents, most commercial saturants are currently coated out of water. Examples of water-based latex saturants suitable for use in tape backings are disclosed in U.S. Patent No. 2,961,348 (Finnegan), U.S. Patent No. 3,256,234 (Miller), and U.S. Patent No. 3,324,006 (Arcangeli).

Several references teach the use of filler in the saturant formulation. For example, U.S. Patent No. 3,026,241 (Hechtman) teaches a saturated fiber product comprising a web of loosely bonded fibers saturated with a composition containing a copolymer having carboxylic acid groups or salts thereof. Several additives may be employed in the saturant formulation, including salts of heavy metals, antioxidants, sensitizing agents, and fillers such as clay, calcium carbonate, talc and the like. The fillers may be used to the extent of 0 to 100 parts per 100 parts by weight of copolymer on a dry solids basis. U.S. Patent No. 4,849,278 (Stokes) discloses a paper-based web saturated with a soft, stretchy polymer saturant, preferably a soft acrylic polymer having a glass transition temperature $T_g$ in the range of from -45°C to 0°C. The saturant composition may include mixtures of polymers that are compatible in the saturating composition as well as other ingredients such as fillers including titanium dioxide and clay up to an amount of about 50% by total weight. U.S. Patent No. 3,256,234 (Miller) also discloses the use of pigment and filler in a latex compositions used to unify nonwoven fibrous articles. Although these references teach the use of fillers as loading or extending agents in the saturant formulation, it is generally understood by those skilled in the art that pressure sensitive adhesive tapes made from backings which incorporate saturant and filler show decreased adhesion compared to tape made from backing which incorporates elastomer only. This is especially true upon aging.

U.S. Patent No. 3,464,848 (Hechtman) discloses a pressure-sensitive tape having an impregnated fibrous base sheet in which the strengthening impregnant of the base sheet comprises a styrene butadiene polymer and a solubilizing agent. Suitable solubilizing agents include hydrogenated rosins, esters of hydrogenated rosins, and esters of rosin as well as terpene resins such as those soluble in mineral oil and petroleum hydrocarbon resins soluble in aliphatic and aromatic hydrocarbons. These solubilizing agents are commonly known in the art as tackifying resins.

Applicants have discovered that a water-based latex saturant can be compounded with both filler and tackifier resin, with the surprising result that pressure sensitive adhesive tapes made with backings incorporating the compounded latex saturant maintain adhesion values even after aging. In addition, paper backings incorporating the compounded latex saturant have improved drape or hand compared to papers incorporating saturants comprising elastomer and tackifier resin alone, or elastomer and filler alone. Drape or hand is related to elongation and conformability and is described as being soft or hard. A backing with soft drape or hand does not recover upon being stretched (referred to as a dead stretch). A tape made with such a backing will better conform to a surface because there are reduced recovery forces causing the tape to change its position once it is applied. Finally inclusion of filler in the tackified saturant can also provide cost savings without compromising critical properties of the backing, such as tensile strength, flex resistance, and elongation.

## Summary of the Invention

The present invention is directed to a compounded latex saturant containing an elastomer, tackifying resin and filler. The novel saturant comprises as dry ingredients 100 parts by weight elastomer; about 10 to 100 parts by weight of a tackifying resin; about 10 to 50 parts by weight of a filler; and about 0 to 30 parts by weight of a plasticizer. The dry ingredients are dispersed in an aqueous medium. The saturant of the present invention may also be modified with supplementary materials including, for example, antioxidants, stabilizers, chelating agents, surfactants, emulsifiers, pigments, and the like.

The present invention is also directed to a porous backing saturated with the novel compounded latex saturant and to an adhesive tape or sheet which employs the backing. The term "saturated" does not imply 100% absorption of the saturant into the backing. In other words the backing is not required to be completely saturated.

The backing may be any material that is sufficiently open or porous to allow penetration of the latex saturant into the backing matrix. A preferred backing is paper, and the backing may contain from about 35 to about 75 parts by weight of the compounded latex saturant per 100 parts by weight paper.

The backing of the invention is suitable for use in pressure sensitive adhesive tapes, labels and protective sheeting. The backing is especially useful in pressure sensitive adhesive tapes and sheets that are employed in applications that require conformability and extensibility. The pressure sensitive adhesive of the invention comprises (1) a porous backing having first and second surfaces, said backing comprising a porous substrate saturated with the latex saturant of the invention and (2) a pressure sensitive adhesive coating on at least a portion of one of said first and second surface of said backing. When the adhesive is coated on only one side of the backing, a release coat may also be included on the side of the backing opposite the adhesive so that the tape can be dispensed in roll form. A barrier coating may also be used before applying the release coating. A primer may also be applied before applying the adhesive.

## Detailed Description of the Invention

The present invention is directed to a novel compounded latex saturant containing an elastomer, tackifying resin and filler. The elastomer may be either natural or synthetic rubber, an acrylic elastomer, or a blend thereof. Synthetic rubber elastomers may include, for example, styrene butadiene rubber (SBR), carboxylated SBR, SBR-acrylonitrile rubber, and butadiene-nitrile rubber, and a preferred rubber elastomer is Butofan™ NS-248 available from BASF Corporation (Chattanooga, TN). Butofan™ NS-248 is a SBR latex comprising 50.5 weight percent solids, having a pH of 9 and a Brookfield viscosity of 150 centipoise, and containing 41 to 43 weight percent styrene. Latex acrylic elastomers may include acrylic copolymers and carboxylated acrylics. Preferred are soft acrylic polymers having a glass transition temperature ($T_g$) in the range of -45 to 0°C, such as, for example, Hycar™ 26104 and 26083, available from B.F. Goodrich Company (Cleveland, OH).

Tackifiers or tackifying resins generally refer to materials which are miscible with the elastomer, have a number average molecular weight $M_n$ of about 10,000 grams per mol (g/mol) or less, a softening point in the range of 70 to 120°C as determined using a ring and ball apparatus, and a glass transition temperature ($T_g$) of -30°C or more as measured by differential scanning calorimetry (DSC). Suitable tackifying resins may include rosin and rosin derivatives, hydrogenated rosins, esters of hydrogenated rosins, terpenes, coumarone indenes and aliphatic and aromatic hydrocarbon resins, for example: alpha pinene-based resins, beta pinene-based resins, limonene-based resins, piperylene-based hydrocarbon resins, esters of rosins, polyterpene and aromatic modified polyterpene resins, aromatic modified piperylene-based hydrocarbon resins, aromatic modified dicyclopentadiene-based hydrocarbon resins and aromatic modified co-terpene and ter-terpene resins. Examples of commercially available tackifying resins useful in the invention include, for example, Dresinol™ 205, Staybelite™ Ester 10, Pentalyn™ H, Piccopale™ A-55, Piccolyte™ S-115, and Foral™ family resins, all available from Hercules Incorporated (Wilmington, DE). Dresinol™ 205, Staybelite™ Ester 10, Pentalyn™ H, Piccopale™ A-55, and Foral™ family resins are all based on wood rosin. Piccolyte™ S-115 is a terpene resin produced from a monomeric terpene beta-pinene starting material. The tackifying resin is generally present in the compounded latex saturant in an amount of from about 10 to about 100 parts by dry weight per hundred parts by dry weight elastomer. Preferably it is present at from about 20 to about 60 parts, and more preferably from about 35 to 45 parts, by dry weight per 100 parts by dry weight elastomer.

Fillers are included in the saturant formula to decrease the porosity of the backing and to provide a better feel and appearance to the finished tape. The filler may also be selected to have oil absorption features to facilitate the retention of surfactants in the backing. Backings which incorporate a filled saturant feel more flexible and slippery and are more opaque than backings which incorporate a comparable unfilled saturant. Mechanical processing, such as calendaring, can also be used to further improve the hand and provide increased conformability of the backing.

The decreased porosity of the backing resulting from the use of filler in the saturant formulation also helps to limit penetration of any barrier coat that may be subsequently applied to the backing. In general, barrier coat penetration makes the backing stiffer and decreases the tear resistance of the backing, a problem remedied by the addition of more saturant to the backing. Inclusion of a filler in the saturant reduces barrier penetration and, in addition, reduces the amount of barrier coat and elastomer required, resulting in significant cost savings.

Suitable fillers for use in the present invention include, for example, talc, zinc oxide, clay, titanium dioxide, aluminum oxide, and silica. The fillers may be used individually if desired. Alternatively, two or more may be used in the practice of the invention. A preferred filler is clay having a particle size of about 5 um or less. The filler is generally present in an amount of from about 10 to 50 parts by dry weight per 100 parts by dry weight elastomer. Preferably it is present at from about 15 to about 45 parts, more preferably from about 20 to 35 parts, by dry weight per 100 parts by dry weight elastomer.

Plasticizers may also be used in the saturant formulation to provide wetting action and/or viscosity control. Useful plasticizers include those that are well known in the art and may include hydrocarbon oils, liquid or soft tackifiers, including liquid hydrocarbon resins, liquid polyterpenes, liquid rosin esters, liquid polystyrene resins and the like, elastomer oligomers, waxes, and mixtures of oils and hard tackifiers. Preferred plasticizers are low molecular weight hydrocarbon resins, such as Piccovar AP-25 available from Hercules Incorporated (Wilmington, DE). The plasticizer may be employed in an amount of from 0 to about 30 parts by dry weight per 100 parts by dry weight elastomer. Preferably, plasticizer is present in an amount of from about 10 to about 20 parts, more preferably from about 15 to 20 parts, by weight per 100 parts elastomer.

The compounded latex saturant of the present invention may also be modified with supplementary materials including, for example, antioxidants, stabilizers, chelating agents, surfactants, emulsifiers, pigments, and the like.

The present invention is also directed to a porous backing saturated with the novel compounded latex saturant and to an adhesive tape which employs the backing. The backing may comprise any substrate that is sufficiently open to allow penetration of the latex saturant into the backing matrix. Preferably, the backing should have a Gurley densometer value of less than 100 seconds (seconds required for 400 mls of air to flow through a 1.0 square inch [2.54 x 2.54 square cm] of two ply of paper). If the tape is to be used as a masking tape, the Gurley densometer value is preferably from about 4 to 20 seconds, and more preferably about 12 seconds. Papers especially useful in masking tape applications comprise semi-bleached pulp of Northern softwood and have a basis weight of about 20-60 pounds per ream (33-99 $g/m^2$), a caliper of 3.5 to 8 mils (89-200 um), and a machine directional tensile to cross directional tensile ratio (MD/CD) of 2:1. The saturated paper backing may contain from about 35 to about 75 parts by weight of the dry ingredients of the saturant per 100 parts by weight paper. Preferably it contains from about 45 to 70 parts by weight, and more preferably from about 55 to 65 parts by weight, of the dry ingredients per 100 parts by weight paper.

A preferred use of the compounded latex saturated backing of the present invention is for use in pressure sensitive adhesive tapes, labels and protective sheeting. The saturated backing is especially useful in the manufacture of pressure sensitive adhesive tapes and sheets used in applications that require conformability and extensibility, for example, masking tapes, protective sheeting, diaper and frontal tapes, packaging tapes, medical tapes, autoclave indicator tapes, and identification tapes or labels. Pressure sensitive tapes, sheets and labels of the invention comprise a compounded latex saturated backing having first and second major surfaces and a pressure sensitive adhesive coated on at least a portion of the first major surface. The adhesive may be coated onto both sides of the backing to form a double sided tape, and a release liner may also be included to protect the adhesive surface.

Pressure sensitive adhesives are materials which in dry form are permanently tacky at room temperature and adhere to a variety of dissimilar surfaces upon mere contact without the need of more than finger or hand pressure. Useful pressure sensitive adhesives for the present invention may generally be classified into the following categories:

- Random Copolymer adhesives such as those based upon acrylate and/or methacrylate copolymers, α-olefin copolymers, silicone copolymers, chloroprene/acrylonitrile copolymers, and the like.

- Block Copolymer adhesives including those based upon linear block copolymers (i.e., A-B and A-B-A type), star block copolymers, comb block copolymers, and the like.
- Natural rubber adhesives.

A description of useful pressure-sensitive adhesives may be found in Encyclopedia of Polymer Science and Engineering, Vol. 13, Wiley-Interscience Publishers (New York, 1988). Additional description of useful pressure-sensitive adhesives may be found in Encyclopedia of Polymer Science and Technology, Vol. 1, Interscience Publishers (New York, 1964).

Other pressure-sensitive adhesives useful in the invention are described in the patent literature. Examples of these patents include Re 24,906 (Ulrich), U.S. 3,389,827 (Abere et al. at Col. 4-Col. 5), U.S. 4,080,348 (Korpman), U.S. 4,136,071 (Korpman), U.S. 4,792,584 (Shiraki et al.), U.S. 4,883,179 (Young et al.), and U.S. 4,952,650 (Young et al.). One useful adhesive commonly employed in masking tape formulations comprises 50 parts by weight crude rubber; 50 parts by weight SBR rubber; about 60 parts by weight tackifying resin (such as Sta-Tac-B™, available from Reichold Chemicals, Inc.); about 12.5 parts by weight zinc oxide; and about 1 part by weight antioxidant (such as Wingstay L™, available from Goodyear Tire & Rubber Company). Another useful adhesive is an adhesive comprising poly(alpha-olefin) polymers according to U.S. Patent 5,112,882 (Babu).

When the adhesive is coated on only one side of the backing, a release coat may be used on the backing opposite the adhesive so that the tape can be dispensed in roll form. The release coating provides a surface which is not strongly adhered to by the pressure sensitive adhesive. Conventional pressure sensitive adhesive release coatings are based on long chain alkyl groups such as octadecyl isocyanate or octadecyl acrylate. Other useful release coatings comprise fluorocarbon, organo-silicone, silicone, polyvinyl chloride, polyamide or melamine materials. Release coatings are typically applied in the weight range of 0.2 to 1.0 grams per square meter of backing.

A barrier layer may also be applied before applying the release coating. The barrier coating preferably imparts some solvent resistance to the coated backing. The barrier coating may be any elastomeric coating with a glass transition temperature of 5°C to 75°C. Some examples of useful barrier coatings include those that are based on acrylates, polyesters, styrene butadienes, styrene butadiene-acrylonitriles, melamines, polyamides or urea formaldehyde resins. The barrier coating is typically applied in the weight range of 5 to 10 grams per square meter of backing.

Finally, a primer coating may be applied to the backing before applying the adhesive. Primer may comprise natural rubber, SBR or neoprene rubbers, or mixtures thereof, blended with resins which are reactive and/or unreactive and filler. The primer coating is typically applied in the weight range of 2 to 6.3 grams per square meter of backing.

## Experimental Examples:

Several saturated paper backings were prepared to determine the effect of compounding on backing performance. The preparation and testing of these backings are described in Example 1. Pressure sensitive adhesive tape samples were also made from a series of saturated backings incorporating elastomer alone, elastomer compounded with tackifying resin, elastomer compounded with filler, and elastomer compounded with both tackifying resin and filler. The preparation and testing of both the saturated backings and tapes made from the backings are described in Examples 2 through 5. All parts by weights given in the examples are based on solids. The present invention is illustrated by these examples, but the particular materials and amounts thereof recited in these examples, as well as other conditions and details, should not be construed to unduly limit this invention.

### Example 1

For each of the backings #1, #2, and #3, a 31 pound per ream (51 g/m$^2$) semi-bleached creped paper sheet was saturated with an elastomer latex alone. Backing #1 was prepared using Butofan™ NS-248 SBR latex, available from BASF Corporation (Chattanooga, TN); backing #2 was prepared using only Acronal™ 500D acrylic elastomer latex, also available from BASF Corporation; and backing #3 was prepared using a 50/50 blend by weight of the SBR and acrylic elastomers latices. The creped paper sheet was saturated by immersing the web in the latex elastomer, metering off the excess with a squeeze roll nip, and drying the web. The saturant pickup was 52-55% for backings #1, #2 and #3 as measured by the difference in weight of the paper before and after saturation (for example, a paper weighing 1 gram before saturation and 1.6 grams after saturation would have a pickup of 60%.)

100 parts by weight (based on solids) of each of the three elastomers latices identified above was then blended with 40 parts by weight (based on solids) Staybelite™ Ester 10 tackifying resin, available from Hercules Incorporated (Wilmington, DE); and 25 parts by weight (based on solids) Amazon A-88 clay, available from AKW, Amberger Kaolinwerke GmbH, (Hirschau, Germany) to form the compounded saturant. The tackifying resin was supplied predispersed by the supplier, and a separate dispersion of clay in water was prepared at about 50% solids. The dispersions of resin and filler were added to the elastomer latex in a Lightening paint mixer (in no particular order), mixed, and diluted down to about 38% solids with water. The creped paper sheet was saturated by immersing the web in each of the compounded latex saturants, metering off the excess with a squeeze roll nip, and drying the web. The saturant pickup was 52-55% for backings #4, #5 and #6. Backing #4 was prepared by compounding 100 parts by weight (based on solids) of a 50/50 blend of SBR and acrylate latices with 40 parts by weight (based on solids) resin and 25 parts by weight (based on solids) clay. Backing #5 was prepared by compounding 100 parts by weight (based on solids) of Butofan™ NS-248 SBR latex with 40 parts by weight (based on solids) resin and 25 parts by weight (based on solids) clay. Backing #6 was prepared by compounding 100 parts by weight (based on solids) Acronal™ 500D acrylate latex with 40 parts by weight (based on solids) resin and 25 parts by weight (based on solids) clay.

The saturated backings were characterized using several standard test methods to evaluate their performance. Taber stiffness values were determined in both the machine direction and cross direction according to TAPPI standard test method T489 om-86, Stiffness of Paper and Paperboard. Five replicate analyses of each were performed, and the results are reported in Table 1 as "Taber Values" in the machine direction (MD) and cross direction (CD). The tensile and elongation at break of the saturated backing were measured in the machine direction according to TAPPI standard test method T 494 om-88, Tensile Breaking Properties of Paper and Paperboard. Five replicate analyses of each were performed, and the results are reported in Table 1 as "Tensile" and "Elongation".

Table 1

| Characteristics of Paper Backings | | | | | |
|---|---|---|---|---|---|
| Backing # | Taber | Values | Tensile | | Elongation % |
| | MD | CD | lbs/in | N/100mm | |
| 1 | .414 | .314 | 26.7 | 468 | 10.2 |
| 2 | .416 | .318 | 29.0 | 508 | 10.5 |
| 3 | .436 | .296 | 28.1 | 492 | 12.0 |
| 4 | .440 | .270 | 26.9 | 471 | 10.0 |
| 5 | .400 | .282 | 26.0 | 455 | 10.0 |
| 6 | .494 | .394 | 29.1 | 510 | 8.8 |

From these results, it is apparent that the use of a saturant comprising elastomer compounded with both tackifying resin and filler does not compromise the physical properties of the backing.

**Example 2**

A 31 pound per ream (51 g/m$^2$), semi-bleached creped paper sheet was saturated with Butofan™ NS-248 SBR elastomer latex, available from BASF Corporation (Chattanooga, TN), by immersing the web in the latex, metering off the excess saturant with a squeeze roll nip, and drying the web. The percent pickup was measured as a difference in the weight of the paper before and after saturation.

The saturated backing was characterized using several standard test methods to evaluate its performance. The tensile and elongation at break of the saturated backing were measured in the machine direction according to TAPPI standard test method T 494 om-88, Tensile Breaking Properties of Paper and Paperboard. Five replicate analyses of each were performed, and the results are reported in Table 2 as "Tensile" and "Elong." The Elmendorf Tear was measured in the cross direction according to TAPPI standard test method T 414 ts-65, Internal Tearing Resistance of Paper. Three replicate analyses were performed, and the results are reported in Table 2 as "Tear". The MIT folding endurance was measured in the machine direction according to TAPPI test method T 511 om-88, Folding Endurance of Paper (MIT tester). Three replicate analyses were performed, and the results are reported in Table 2 as "MIT Flex". The reported values indicate the number of cycles at which failure occurred. The delamination resistance of the backing was also measured according to TAPPI standard test method T 541 om-89, Internal Bond Strength of Paperboard (Z-direction tensile), except that heat was used to provide sufficient bond to delaminate the backing. Three replicate analyses were performed, and the results are reported in Table 2 as "Delamination Resistance".

A pressure sensitive tape was made from the saturated backing. The saturated backing was first barrier coated using a heat reactive acrylic emulsion, TR-407, available from Rohm and Haas (Philadelphia, PA). A copolymer acrylate release coating was first applied to the one side of the backing. A conventional rubber-based masking tape adhesive was then solvent coated onto the other side of the paper backing. The adhesive formulation comprised 50 parts by weight crude rubber and 50 parts by weight SBR elastomer, 60 parts by weight Sta-Tac-B™ tackifier resin, 12.5 parts by weight zinc oxide, and about 1 part by weight Wingstay L™ antioxidant. The adhesive was applied out of heptane at a coating weight of about 9-10 grains/24 sq. in. (38-42 grams/m$^2$) and then dried to remove the solvent. Adhesion values for the tape were determined as prepared, after dry heat aging for 16 hours at 150°F (66°C), and after natural aging for 3 months at ambient conditions, according to ASTM standard test method D 3330-90 for peel adhesion of single-coated pressure sensitive tape at 180° angle. The adhesion values to glass are summarized in Table 2 and represent the average of duplicate analyses.

**Example 3**

Example 2 was repeated except the paper sheet was saturated with 100 parts by weight (based on solids) Butofan™ NS-248 SBR elastomer latex compounded with 40 parts by weight (based on solids) Staybelite Ester 10 tackifying resin, available from Hercules Inc. (Wilmington, DE). The resin comes predispersed from the supplier and was simply added to the latex emulsion in a Lightening paint mixer and diluted down to about 38% solids with water. The backing and adhesion properties were determined as in Example 2, and are summarized in Table 2.

**Example 4**

Example 2 was repeated except the paper sheet was saturated with 100 parts by weight (based on solids) Butofan NS-248 SBR elastomer latex compounded with 25 parts by weight (based on solids) Amazon A-88 clay filler, available from AKW, Amberger Kaolinwerke GmbH, (Hirschau, Germany). A separate dispersion of clay in water was prepared at about 50% solids. The clay dispersion was then added to the latex emulsion in a Lightening paint mixer, and the combined mixture was diluted down to about 38% solids with water. The backing and adhesion properties were determined as in Example 2, and are summarized in Table 2.

**Example 5**

Example 2 was repeated except the paper sheet was saturated with 100 parts by weight (based on solids) Butofan NS-248 SBR elastomer latex compounded with 40 parts by weight (based on solids) Staybelite Ester 10 tackifying resin and 25 parts by weight (based on solids) Amazon A-88 clay filler prepared as described in Examples 3 and 4. The order of addition is not critical. The backing and adhesion properties were determined as in Example 2, and are summarized in Table 2.

Table 2
Backing and Tape Properties

| Sample # | Pickup % | Tensile | | Elong. % | Tear (g) | MIT Flex (cycles) | Delamination Resistance | | Adhesion to glass | | | | | |
| | | | | | | | | | Initial | | Heat aged | | 3 Months | |
| | | lb./in. | N/100mm | | | | oz./in. | N/100mm | oz./in. | N/100mm | oz./in. | N/100mm | oz./in. | N/100mm |
| 1 | 53 | 23.5 | 411 | 11.0 | 75 | 289 | 39 | 43 | 34 | 37 | 38 | 42 | 35 | 38 |
| 2 | 58 | 22.1 | 387 | 10.0 | 70 | 437 | 36 | 39 | 42 | 46 | 52 | 57 | 53 | 58 |
| 3 | 53 | 23.6 | 413 | 10.6 | 72 | 440 | 36 | 39 | 39 | 43 | 36 | 39 | 38 | 42 |
| 4 | 61 | 22.8 | 399 | 9.2 | 67 | 454 | 37 | 37 | 42 | 46 | 51 | 56 | 53 | 58 |

Note:    Sample 1, according to Example 2, contains only SBR elastomer
Sample 2, according to Example 3, contains SBR + 40 parts tackifying resin
Sample 3, according to Example 4, contains SBR + 25 parts filler
Sample 4, according to Example 5, contains SBR + 40 parts tackifying resin + 25 parts filler

## Results

From the testing of the porous backings, the data shows that the use of a saturant comprising elastomer compounded with both tackifying resin and filler does not compromise the physical properties (tensile,

8

elongation, tear, folding endurance, and delamination resistance) of the backing.

From the testing of the tapes, the following observations can be made:

(1) Tape made from backing saturated with elastomer compounded with tackifying resin alone showed improved adhesion over tape made from backing saturated with elastomer alone. This difference is especially pronounced as the samples are aged.

(2) Tape made from backing saturated with elastomer compounded with filler alone exhibited adhesion values similar to those for tape made from backing saturated with elastomer alone.

(3) Tape made from backing saturated with both tackifying resin and filler showed improved adhesion over tape made from backing saturated with elastomer alone or elastomer and filler alone. This difference is especially pronounced as the samples are aged. In addition, the paper backings incorporating saturant compounded with both tackifying resin and filler gave a better hand or drape than backings incorporating saturant compounded with only tackifier resin.

## Claims

1. A compounded latex saturant, comprising as dry ingredients
   (a) 100 parts by weight elastomer;
   (b) about 10 to 100 parts by weight tackifying resin;
   (c) about 10 to 50 parts by weight filler; and
   (d) about 0 to 30 parts by weight plasticizer;
   wherein said dry ingredients are dispersed in an aqueous medium.

2. The saturant according to Claim 1, wherein the tackifying resin is present as a dry ingredient in an amount of from about 20 to 60 parts by weight.

3. The saturant according to Claim 1, wherein the filler is present as a dry ingredient in an amount of from about 15 to 45 parts by weight.

4. The saturant according to Claim 1, wherein the plasticizer is present as a dry ingredient in an amount of from about 10 to 20 parts by weight.

5. The saturant according to Claim 1, wherein the elastomer comprises a soft acrylic polymer having a glass transition temperature Tg in the range of -45°C to 0°C.

6. The saturant according to Claim 1, wherein the tackifying resin is selected from the group consisting of rosins, rosin derivatives, hydrogenated rosins, esters of hydrogenated rosins, terpenes, coumarone indenes and aliphatic or aromatic hydrocarbon resins.

7. The saturant according to Claim 4, wherein the plasticizer comprises a low molecular weight hydrocarbon resin.

8. The saturant according to Claim 1, wherein said filler is selected from the group consisting of talc, Zinc oxide, clay, titanium dioxide, aluminum oxide, and silica, and combinations thereof.

9. The saturant according to Claim 8, wherein said filler is clay having a particle size less than about 5 um.

10. A backing comprising a porous substrate saturated with the compounded latex saturant according to Claim 1.

11. The backing according to Claim 10, wherein said porous substrate has a Gurley densometer value of less than 100 seconds.

12. The backing according to Claim 11 wherein said porous substrate is paper.

13. A saturated backing for pressure sensitive adhesive tapes, comprising 100 parts by weight paper and about 35 to 75 parts by weight of the dry ingredients of the latex saturant according to Claim 1.

14. A pressure sensitive adhesive tape, comprising:

(1) a porous backing having first and second surfaces, said backing comprising a porous substrate saturated with the latex saturant according to Claim 1, and

(2) a pressure sensitive adhesive coating on at least a portion of one of said first and second surfaces of said backing.

15. The pressure sensitive adhesive tape according to Claim 14 wherein said porous substrate is paper.

16. The pressure sensitive adhesive tape according to Claim 15 wherein said porous substrate comprises 20 to 60 pounds per ream (33-99 g/m$^2$) semi-bleached creped paper.

17. The pressure sensitive adhesive tape according to Claim 14 wherein one of said first and second surfaces of said backing further comprises a barrier coating.

18. The pressure sensitive adhesive tape according to Claim 14 wherein one of said first and second surfaces comprises a pressure sensitive adhesive release coating.

19. The pressure sensitive adhesive tape according to Claim 14 wherein one of said first and second surfaces comprises a primer coating.

20. The pressure sensitive adhesive tape according to Claim 14 wherein said adhesive is coated on at least a portion of said first and second surfaces of said backing.

21. The pressure sensitive adhesive tape according to Claim 14 wherein said adhesive is selected from the group consisting of acrylate, methacrylate, silicone, block copolymer, alpha-olefin, chloroprene/acrylonitrile, and natural rubber adhesives.

European Patent Office

**EUROPEAN SEARCH REPORT**

Application Number

EP 94 10 5673

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-3 127 284 (BAILIN)<br>* claims 1,10 * | 1-21 | C09J7/04<br>D21H17/34 |
| X | DATABASE WPI<br>Derwent Publications Ltd., London, GB;<br>AN 88-352010<br>& SU-A-1 397 584 (BELORUSS) 23 May 1988<br>* abstract * | 1-21 | |
| Y,D | US-A-3 464 848 (HECHTMAN ET AL)<br>* claim 1 * | 1-21 | |
| Y<br>D | EP-A-0 213 596 (KIMBERLEY-CLARK)<br>& US-A-4 849 278 (SAME)<br>* page 8 * | 1-21 | |
| A | GB-B-975 947 (SCHOLL)<br>* claim 1 * | 1 | |

TECHNICAL FIELDS
SEARCHED (Int.Cl.5)

C09J
D21H

The present search report has been drawn up for all claims

| Place of search | Date of completion of the search | Examiner |
|---|---|---|
| THE HAGUE | 2 September 1994 | Lentz, J |

EPO FORM 1503 03.82 (P04C01)